# EUROPEAN PATENT SPECIFICATION

(11) **EP 3 315 328 B1**
(45) Date of publication and mention of the grant of the patent: **08.04.2020**
(21) Application number: 17178866.4
(22) Date of filing: 29.06.2017
(51) Int. Cl.: B60C 15/04

(54) **CABLE BEAD FOR PNEUMATIC TIRE AND PNEUMATIC TIRE HAVING THE SAME**
KABELWULST FÜR LUFTREIFEN UND LUFTREIFEM DAMIT
BOURRELET DE CÂBLE POUR PNEUMATIQUE ET PNEUMATIQUE LE COMPORTANT

(30) Priority: 26.10.2016 KR 20160140390; 22.12.2016 KR 20160176557
(43) Date of publication of application: 02.05.2018
(73) Proprietor: Kumho Tire Co., Inc., Gwangju 62392 (KR)
(72) Inventor: PARK, Byung Chul, Jeollanam-do (KR); KIM, Woo Young, Incheon (KR)
(74) Representative: Brevalex

(56) References cited:
- JP-A- 2006 062 641
- JP-A- 2011 225 070
- JP-A- 2014 019 267
- US-A1- 2006 266 457
- US-A1- 2011 168 315

## Description

### CROSS-REFERENCE TO RELATED APPLICATIONS

This application is based on and claims priority from the Korean Patent Application No. 10-2016-0176557 filed on December 22, 2016 and the Korean Patent Application No. 10-2016-0140390 filed on October 26, 2016, with the Korean Intellectual Property Office (KIPO).

### TECHNICAL FIELD

The present disclosure relates to a cable bead for a pneumatic tire which constitutes a bead part of a pneumatic tire, and a pneumatic tire having the same, and more particularly, to a cable bead for a pneumatic tire which improves rubber permeability by restricting a ratio between a diameter of a cable and a pitch of an outer wire, and improves durability of a pneumatic tire by improving rubber adhesive properties through cobalt coating on a surface of the outer wire, and a pneumatic tire having the same.

### BACKGROUND

In general, a pneumatic tire includes a tread which comes into contact with a road surface, a carcass which constitutes a framework of the tire, a belt part which is installed between the tread and the carcass, an inner liner which prevents a leakage of air, a sidewall which protects the carcass and flexibly bends and stretches, and a bead part which allows the tire to be mounted to a rim.

Here, the bead part is an important part which supports a load of a vehicle by fixing the tire to the rim of the vehicle, transmits rotational force of an axle to the tire, and maintains a balance of a vehicle body by absorbing shocks from the ground surface. Further, the bead part has strands of wires configured by steel cords, and serves to mount and fix the tire to the rim. In addition, the bead part serves to fix a carcass cord for supporting air pressure in the tire and supporting force that bends and stretches the tire when the vehicle travels. In particular, in a tubeless tire, the bead part of the tire serves to prevent a leakage of air between the tire and a rim of a wheel, and the rim of the wheel is formed to coincide with a mounting position of the bead and thus serves as a support body for the tire bead.

Therefore, the bead part needs to have high rigidity. To this end, the bead, which constitutes the bead part, is made by using wires having rigidity of about 280 to 320 kg/cm², and the bead is classified into a tape bead and a cable bead depending on an arrangement form of the wires that constitute the bead.

The tape bead is formed by cutting a bead strip, which is made by arranging a plurality of strands of wires in parallel and covering the wires with a rubber layer, to a tape shape having a predetermined width and a predetermined thickness. Further, the cable bead is formed by twisting and winding, several times, a strand of an outer wire around an outer circumferential surface of a core wire, or twisting and winding, several times, a strand of an outer wire around an outer circumferential surface of a core wire and then twisting and winding, several times, a strand of another outer wire outside the outer wire.

The cable bead has no weight difference between portions in a circumferential direction of the bead, and stress is concentrated at the tape bead, which is manufactured by using the plurality of strands of wires, due to a level difference between a start point and an end point. In contrast, the cable bead is advantageous in improving durability because the core wire is joined by welding without a level difference of the wire, the single strand of wire is twisted and wound, several times, around the core wire, and then an end of the core wire is finished by a clip.

Further, the cable bead is formed by using a plurality of steel cores, and thus suitable to ensure transmission of braking torque and traction torque applied to the tire from the rim while the vehicle accelerates or decelerates, and to prevent the tire from slipping relative to a mounting rim for fixing the tire to the rim, and as a result, the cable bead is used instead of the tape bead or a single winding bead.

However, unlike the single bead or the tape bead in which the wires are coated with rubber and then formed as a bundle of wires, the cable bead in the related art is configured such that one or more wires are twisted and wound around the core wire to form a bundle of steel cords, and then the bundle of steel cords is coated with rubber, and as a result, there is a problem in that the respective wires are not perfectly coated with rubber.

In a case in which the wires, which constitute the cable bead, are not appropriately coated with rubber as described above, heat may be generated due to friction between the wires made of metal, and the wires and the rubber may be abraded due to friction, such that durability of the cable bead and the pneumatic tire may deteriorate. In addition, when the tire is exposed to a wet environment, the wire, which is exposed to the outside as the rubber removed, is corroded due to moisture, and as a result, durability of the cable bead and the pneumatic tire may deteriorate.

Meanwhile, a plurality of patent documents has been found as a result of searching for the related arts associated with the present disclosure, and some patent documents will be described below.

Patent Document KR10-1014546 B1 discloses a mixed layered cable which includes a nonmetallic inner layer, and an unsaturated outer layer including strands which are at least partially made of metal and wound in a spiral shape around the inner layer, in which the cable has a relative elongation percentage At when the cable is broken over 7% when the cable is subjected to measurement with tensile force in accordance with standard ISO 6892 established in 1984. Some cables may be used to reinforce at least one crown protection ply of the tire which is mounted to a large-sized vehicle or heavy equipment, and the others may be used to reinforce the tire bead of a lightweight motor vehicle such as a motor cycle.

Patent Document KR10-1435285 B1 discloses a cable bead for a tire which is formed by twisting and winding, several times, an outer wire around an outer circumferential surface of a core wire, in which end portions of the outer wire are connected by welding by using a clip, and the welding is applied to contact surfaces at both ends of the outer wire, contact surfaces between the clip and the outer wire, and contact surfaces of an upper end surface and a lower end surface of the clip, such that the end portions of the outer wire are connected by welding by using the clip, and as a result, tensile strength of the connection portions is increased to about 90±10% of tensile strength of a basic material, such that durability of the connection portions is increased after the tire is manufactured.

Patent document US2011/168315A1 discloses a 3+9 filaments construction cable bead for pneumatic wire, with a first layer, made of three filaments, surrounded by a seconde layer made up of nine filaments. These filaments, measuring 15/100mm, are wounded with a pitch equal to 10 mm.

Some other architectures are known from patent documents JP2011 225070A, JP2014 019267A, and US2006/266457A1.

### SUMMARY

The present disclosure has been made in an effort to provide a cable bead for a pneumatic tire in which a pitch of an outer wire is determined in consideration of a diameter of a cable, such that rubber permeability to a core wire is improved, heating and abrasion caused by friction between metals are prevented, and thus durability is improved, and a pneumatic tire having the same.

The present disclosure has also been made in an effort to provide a cable bead for a pneumatic tire in which rubber adhesive properties of an outer wire are improved, corrosion of the outer wire in a wet environment is inhibited, and thus corrosion resistance is improved, and a pneumatic tire having the same.

An exemplary embodiment of the present disclosure provides a cable bead for a pneumatic tire, which is applied to a bead part of the pneumatic tire and formed by twisting and winding one or more outer wires around a core wire and has a cable including the outer wires and the core wire, in which a diameter D of the cable and a pitch P of the outer wire satisfy a relationship formula, P/D = 25 to 45.

According to the cable bead for a pneumatic tire, a diameter dₒ of the outer wire may be 25 to 75% of a diameter d of the core wire, and six to fifteen outer wires may be wound around a single core wire.

According to the cable bead for a pneumatic tire, the outer wire may be wound around the core wire in any one of a right-winding manner or a left-winding manner.

According to the cable bead for a pneumatic tire, a surface of the outer wire may be coated with cobalt after wire drawing.

According to the cable bead for a pneumatic tire, the cobalt coating may be performed on the outer wire at a ratio of cobalt 0.4 to 1.2mg for the outer wire 1kg, namely at a ratio of 0.4 to 1.2mg/kg.

According to the cable bead for a pneumatic tire and the pneumatic tire having the same according to the present disclosure, a clearance is present between the outer wires by determining a relationship between the diameter of the cable and the pitch of the outer wire when configuring the cable bead, and as a result, permeability of the rubber is improved, and heating and abrasion caused by friction between metals are prevented, thereby improving durability.

According to the cable bead for a pneumatic tire and the pneumatic tire having the same according to the present disclosure, the cobalt coating layer is formed on the surface of the outer wire, and as a result, rubber adhesive properties are improved, and thus the outer wire is not corroded even though the outer wire is exposed to a wet environment, thereby improving durability.

### BRIEF DESCRIPTION OF THE DRAWINGS

FIG. 1 is a configuration view illustrating a cable bead for a pneumatic tire according to the present disclosure;
FIG. 2 is a cross-sectional view of the cable bead for a pneumatic tire of the present disclosure;
FIG. 3 is a cross-sectional view illustrating a pitch of an outer wire of the cable bead for a pneumatic tire of the present disclosure; and

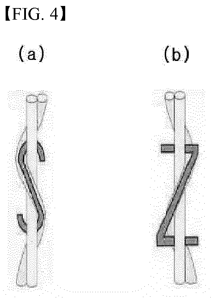

FIG. 4 is a reference view illustrating twisted shapes of the cable bead for a pneumatic tire of the present disclosure.

### DETAILED DESCRIPTION

Hereinafter, a cable bead for a pneumatic tire of the present disclosure will be described below with reference to the accompanying drawings.

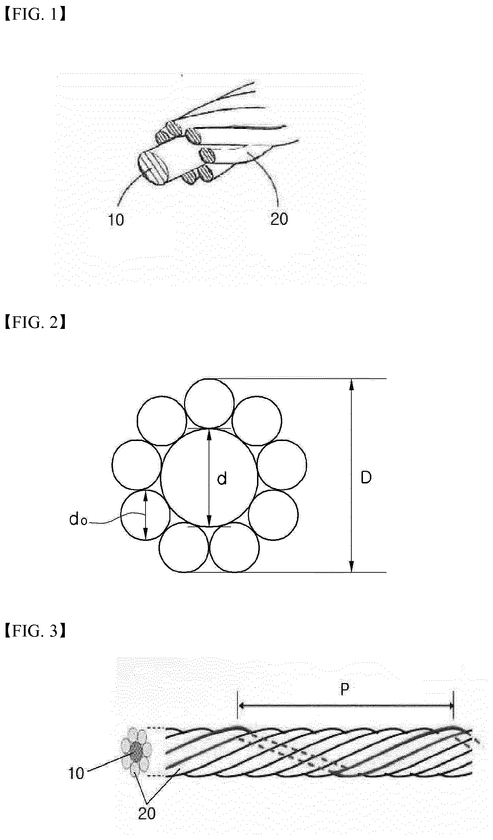

The cable bead for a pneumatic tire according to the present disclosure is applied to a bead part for a pneumatic tire, and as illustrated in FIG. 1, the cable bead is formed by twisting and winding one or more outer wires 20 around a core wire 10.

In this case, preferably, a diameter D of the cable and a pitch P of the outer wire 20 may satisfy a relationship formula, P/D = 25 to 45. The reason is that in a case in which P/D is below 25, the outer wire 20 is excessively bent such that an air gap between the core wire 10 and the outer wire 20 is irregular and thus the outer wire 20 is unstably twisted, and in a case in which P/D is above 45, a line contact surface of the outer wire is increased such that rubber does not easily permeate.

Further, a diameter dₒ of the outer wire 20 is 25 to 75% of a diameter d of the core wire 10, and preferably, 40 to 60% of the diameter d of the core wire 10. Six to fifteen outer wires 20 may be wound around the single core wire 10. The reason is that in a case in which the diameter dₒ is below 25% of the diameter d, the number of outer wires 20 needs to be increased to implement a reinforcement effect by the outer wires 20 and the outer wire 20 is likely to be broken by impact, and in a case in which the diameter dₒ is above 75% of the diameter d, a diameter D of the cable including the core wire 10 and the outer wires 20 may be excessively increased.

In a case in which the pitch P of the outer wire 20 is determined depending on the diameter D of the cable as described above, a clearance is formed between the outer wires 20, and as a result, the rubber easily permeates.

To verify an effect of the relationship formula, P/D = 25 to 45, a breathability test capable of checking rubber permeability was carried out. Typically, the breathability test is a test method which compares rubber permeability of steel cords, and measures time elapsed until air passes through a test material when covering the test material with rubber, vulcanizing the rubber, and then applying air pressure to one end of the test material.

In the present test, a plurality of samples was manufactured while changing a value of P/D, and rubber permeability was checked through the breathability test and evaluation for each specimen, and as a result, a result as shown in Table 1 was obtained.

**[Table 1]**

| Classification | Comparative Example 1 | Example 1 | Example 2 | Example 3 | Example 4 | Comparative Example 2 |
|---|---|---|---|---|---|---|
| P/D | 22 | 32 | 35 | 40 | 45 | 47 |
| Sample 1 | 1.97 | 9.53 | 13.22 | 10.35 | 9.49 | 3.56 |
| Sample 2 | 1.27 | 10.94 | 10.85 | 11.92 | 9.21 | 4.21 |
| Sample 3 | 1.30 | 10.23 | 11.32 | 12.21 | 8.99 | 3.32 |
| Average (second/100 ml) | 1.51 | 10.23 | 11.79 | 11.49 | 9.23 | 3.70 |

Referring to Table 1, in Example 1 and Example 2 which belong to the scope of the present disclosure and have P/D values of 32 and 35, respectively, the average values were 10.23 seconds and 11.79 seconds, and as a result, a satisfactory breathability test result was confirmed. In Comparative Example 1 in which the P/D value was 22 which is below a lower limit value, the time elapsed until air passes was 1.51 seconds in average which is extremely small, and in Comparative Example 2 in which the P/D value was 47 which is above an upper limit value, the time was 3.7 seconds in average, such that the time elapsed until air passes is increased in comparison with Comparative Example 1, but it was confirmed that the time was incomparably smaller than those in Examples.

Meanwhile, a surface of the outer wire 20 may be coated with cobalt after wire drawing. In this case, the cobalt coating is performed on the outer wire 20 at a ratio of 0.4 to 1.2 mg/kg, more particularly, 0.8 to 0.9 mg/kg. The reason is that in a case in which the cobalt coating was performed on the outer wire 20 at a ratio of below 0.4 mg/kg, an effect was inadequate, and in a case in which the cobalt coating was performed on the outer wire 20 at a ratio of 1.2 mg/kg or more, an effect was not increased any further. Further, the cobalt coating on the outer wire 20 serves to improve wet aging adhesive properties of the rubber.

To verify an effect of the cobalt coating, a wet heat adhesive force evaluation test, which is a test for checking a change in adhesive force after the outer wire has aged due to an environment, was carried out. In the wet heat adhesive force evaluation test, after the cord and the rubber were vulcanized together, and then left unattended under a condition of 80°C and R.H 85% for three or more weeks, an attachment ratio between the cord and the rubber was investigated, and a result thereof is as shown in the following Table 2. In Table 2, the attachment ratios between the cord and the rubber in the multiple examples, in which the amount of cobalt coating is changed based on Comparative Example 1 (100%), are indicated by comparison indexes %.

Referring to Table 2, it was confirmed that an effect was realized when the amount of cobalt coating is 0.4 mg/kg, and the effect was consistently maintained even though the amount of cobalt coating exceeds 1.2 mg/kg.

**[Table 2]**

| Classification | Comparative Example 1 | Comparative Example 2 | Example 1 | Example 2 | Example 3 | Example 4 | Example 5 | Example 6 |
|---|---|---|---|---|---|---|---|---|
| Amount of Cobalt (mg/kg) | 0 | 0.3 | 0.4 | 0.5 | 0.59 | 0.87 | 1.2 | 1.5 |
| Wet Heat 3-Week Attachment Index (%) | 100% | 100% | 105% | 110% | 117% | 128% | 129% | 129% |

In the related art, a plating layer is formed on the surface of the outer wire by copper plating or zinc plating, but the copper plating layer or the zinc plating layer is easily corroded due to moisture, and acts as a factor that decreases adhesive force between the rubber and the outer wire due to excessive growth of an adhesive layer caused by moisture. Therefore, the cobalt coating layer, which is capable of preventing the deterioration of the adhesive layer caused by moisture, is formed to improve age-adhesive force due to wetting of the outer wire, and to improve corrosion resistance of the wire.

Further, in order to verify an effect of the cobalt coating layer, the cable beads were manufactured as follows in accordance with Example and Comparative Example, adhesive force indexes and rubber attachment ratios were checked over time, and the results are as shown in Tables 3 and 4.

### <Example>

The cable bead has a structure of 1^{∗}3.0+10^{∗}1.30, the diameter D is 5.6mm, the pitch P of the outer wire is 163 mm, and the outer wire is coated with cobalt so as to have a cobalt content of 0.87 mg/kg.

<Comparative Example>

The cable bead, which is identical to that of Example, is manufactured, but the cobalt coating process is omitted, such that the outer wire does not have a cobalt content.

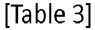

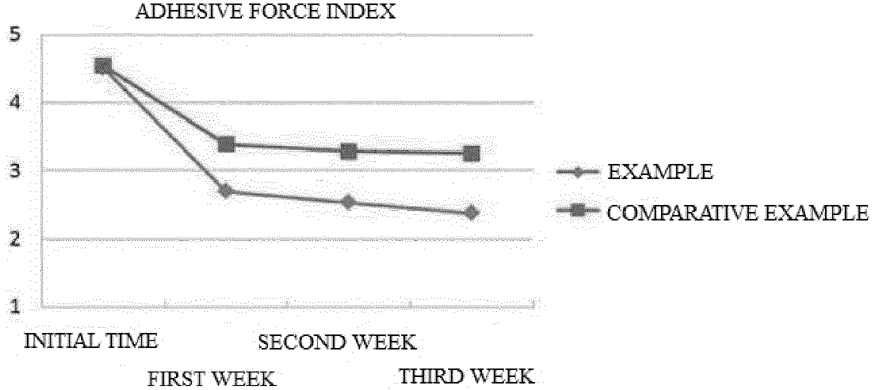

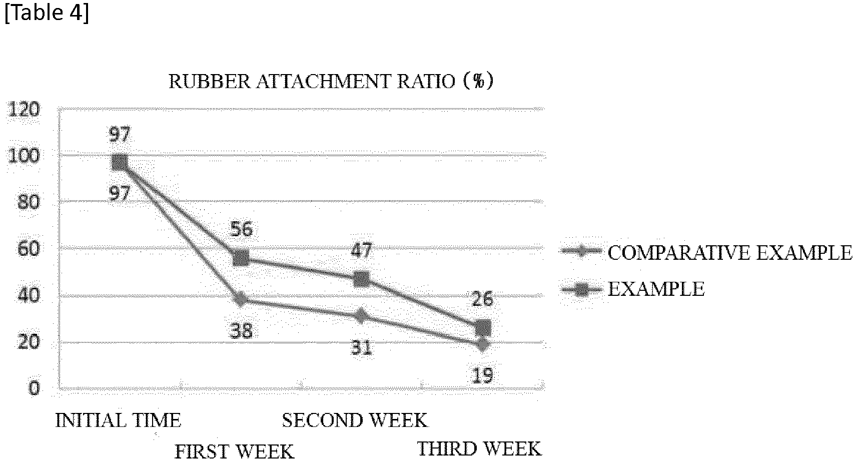

Referring to Tables 3 and 4, it can be seen that in Comparative Example, the adhesive force index and the rubber attachment ratio are continuously decreased as time passed. However, it can be seen that in Example, the adhesive force index and the rubber attachment ratio are significantly decreased at the initial time, but a decrease rate is gradually decreased after predetermined time has elapsed, and as a result, the adhesive force index and the rubber attachment ratio are excellent in comparison with Comparative Example.

Further, 205/60R 16 tires were manufactured by using the cable beads according to Example and Comparative Example, and the finished product tires were piled up in open air in a state of being left unattended for one month, and stored in a wet heat chamber (85°C, 85%RH) condition for one month, and then a tire durability experiment was carried out, and durability indexes according to the experimental result are as shown in the following Table 5.

**[Table 5]**

| Classification | Comparative Example | Example |
|---|---|---|
| Normal Condition | 100% | 100% |
| One-month Piled Up | 100% | 110% |
| One-month Wet Heat Chamber | 100% | 126% |

The durability (%) shown in Table 5 shows, as a percentage (%), time elapsed until the bead part of the tire is broken, which is increased in comparison with Comparative Example, in accordance with evaluation of load durability of the bead part, and it can be seen that durability in Example is excellent by about 10 to 26% in an environment aging condition in comparison with Comparative Example.
While several exemplary embodiments for explaining the technical spirit of the present disclosure have been described and illustrated as described above, it will be well understood by those skilled in the art that the present disclosure is not limited to the configurations and the operations as described above, but only by the appended claims.

## Claims

1. A cable bead for a pneumatic tire, which is applied to a bead part of the pneumatic tire, consisting of a core wire (10) and one or more outer wires (20) twisted and wound around the core wire (10),
**characterized in that** a diameter D of the cable and a pitch P of the outer wire (20) satisfy a relationship formula, P/D = 25 to 45.

2. The cable bead according to claim 1, wherein a diameter dₒ of the outer wire (20) is 25 to 75% of a diameter d of the core wire (10), and six to fifteen outer wires (20) are wound around the core wire (10).

3. The cable bead according to claim 1, wherein the outer wires (20) are wound around the core wire (10) in any one of a right-winding manner or a left-winding manner.

4. The cable bead according to claim 1, wherein a surface of the outer wires (20) are coated with cobalt after wire drawing.

5. The cable bead according to claim 4, wherein the cobalt coating is performed on the outer wires (20) at a ratio of 0.4 to 1.2 mg/kg.

6. A pneumatic tire to which the cable bead according to any one of claims 1 to 5 is applied.

## Patentansprüche

1. Ein Kabelwulst für einen Luftreifen, der bei einem Wulstteil des Luftreifens eingesetzt wird, bestehend aus einem Kerndraht (10) und einem oder mehreren äußeren Draht/Drähten (20), die um den Kerndraht (10) herum verdreht und gewunden sind,
**dadurch gekennzeichnet, dass** ein Durchmesser D des Kabels und eine Steigung P des äußeren Drahts (20) eine Beziehung P/D = 25 bis 45 erfüllen.

2. Der Kabelwulst gemäß Anspruch 1, wobei ein Durchmesser d₀ des äußeren Drahts (20) 25 bis 75% eines Durchmessers d des Kerndrahts (10) beträgt, und sechs bis fünfzehn äußere Drähte (20) um den Kerndraht (10) herum gewunden sind.

3. Der Kabelwulst gemäß Anspruch 1, wobei die äußeren Drähte (20) um den Kerndraht (10) herum in einer rechtsgewundenen Weise oder in einer links-gewundenen Weise gewunden sind.

4. Der Kabelwulst gemäß Anspruch 1, wobei eine Oberfläche der äußeren Drähte (20) nach dem Drahtziehen mit Kobalt beschichtet sind.

5. Der Kabelwulst gemäß Anspruch 4, wobei die Kobalt-Beschichtung an den äußeren Drähten (20) in einem Verhältnis von 0,4 bis 1,2 mg/kg ausgeführt ist.

6. Ein Luftreifen, an dem der Kabelwulst gemäß einem der Ansprüche 1 bis 5 eingesetzt ist.

## Revendications

1. Tringle pour pneu, qui est appliquée sur une partie de talon du pneu, constituée d'un fil central (10) et d'un ou plusieurs fils extérieurs (20) torsadés et enroulés autour du fil central (10), **caractérisée en ce qu'**un diamètre D du câble et un pas P du fil extérieur (20) satisfont à une formule relationnelle, P/D = 25 à 45.

2. Tringle selon la revendication 1, dans laquelle un diamètre dₒ du fil extérieur (20) est de 25 à 75 % d'un diamètre d du fil central (10), et six à quinze fils extérieurs (20) sont enroulés autour du fil central (10).

3. Tringle selon la revendication 1, dans laquelle les fils extérieurs (20) sont enroulés autour du fil central (10) d'une quelconque parmi une manière d'enroulement droit ou une manière d'enroulement gauche.

4. Tringle selon la revendication 1, dans laquelle une surface des fils extérieurs (20) est revêtue de cobalt après un tréfilage.

5. Tringle selon la revendication 4, dans laquelle le revêtement de cobalt est effectué sur les fils extérieurs (20) à un rapport de 0,4 à 1,2 mg/kg.

6. Pneu auquel la tringle selon l'une quelconque des revendications 1 à 5 est appliquée.
